# EUROPÄISCHE PATENTSCHRIFT

(11) **EP 0 881 396 B1**
(45) Veröffentlichungstag und Bekanntmachung des Hinweises auf die Patenterteilung: **02.01.2003**
(21) Anmeldenummer: 98250148.8
(22) Anmeldetag: 30.04.1998
(51) Int. Cl.: F15B 13/00, H01R 13/03

(54) **Vorrichtung zum elektrischen Anschluss von gruppiert angeordneten elektrischen Elementen**
Apparatus for electrical connection of electrical elements arranged in groups
Appareil pour la connexion électrique des éléments électriques arrangés en groupe

(30) Priorität: 27.05.1997 DE 19722925
(43) Veröffentlichungstag der Anmeldung: 02.12.1998
(73) Patentinhaber: Rexroth Mecman GmbH, 30453 Hannover (DE)
(72) Erfinder: Möller, Rudolf, Dipl.-Ing., 30989 Gehrden (DE); Uhlmannsiek, Dirk, Dipl.-Ing., 31275 Lehrte (DE)
(74) Vertreter: Maiwald Patentanwalts GmbH

(56) Entgegenhaltungen:
- EP-A- 0 693 796
- DE-U- 29 507 119
- FR-A- 2 645 602
- US-A- 4 549 248
- US-A- 5 348 047

## Beschreibung

Die Erfindung bezieht sich auf eine Vorrichtung zum elektrischen Anschluß von gruppiert angeordneten elektrischen Elementen gemäß dem Oberbegriff des Anspruchs 1. Eine solche Vorrichtung ist aus der DE-C-39 43 752 bekannt.

Für einen derartigen elektrischen Anschluß sind allgemein Lösungen bekannt, die sich einer freien Verdrahtung bedienen. Bei der freien Verdrahtung werden einzelne Leitungen ausgehend von einer die Ansteuersignale erzeugenden Steuereinheit - wie beispielsweise eine speicherprogrammierbare Steuerung (SPS) - zu den einzelnen gruppiert angeordneten elektrischen Elementen - wie Relais, Glühlampen, Sensoren oder Elektromagnete von Ventilen - geführt. Zum Schutz vor äußeren Einflüssen können die Leitungen zu einem Kabelbaum zusammengefaßt werden. Eine freie Verdrahtung ist jedoch stets von Hand vorzunehmen und unterliegt insoweit einem hohen Montageaufwand. Die Unübersichtlichkeit einer freien Verdrahtung erschwert zudem eine fehlerfreie Montage.

Um die Nachteile einer freien Verdrahtung zu vermeiden wird beispielsweise in der deutschen Patentschrift 40 20 791 eine Lösung für eine einfache Verkabelung von Elektromagneten bei Ventileinheiten vorgeschlagen. Ventileinheiten bestehen aus einer Anzahl von in einer Reihe gruppiert angeordneten Ventilen. Die Ventile werden jeweils über Elektromagnete als Stellantrieb angesteuert. Zur Versorgung der einzelnen Elektromagnete mit einem im Bereich der Niederspannung liegenden binären Ansteuersignal sind die dafür erforderlichen elektrischen Leitungen geschützt innerhalb eines entlang der Ventileinheit verlaufenden und modulartig aufgebauten Kabelkanals untergebracht Es wird eine allen Elektromagneten gemeinsame Leitung verwendet, die an jeweils einen Anschlußpol des Elektromagneten geführt ist. Damit muß nur eine Signalleitung zum jeweils anderen Anschlußpol der Elektromagneten geführt werden. Da insoweit nicht jeder Elektromagnet mit einem separaten Leitungspaar verschaltet ist, reduziert sich die Anzahl der erforderlichen Signalleitungen erheblich. Trotzdem ist bei dieser Lösung wegen der Verwendung einzelner Leitungen noch eine Handverdrahtung erforderlich.

Aus der deutschen Patentschrift 39 43 752 ist zur Vermeidung der Handverdrahtung und zur weiteren Reduzierung des Montageaufwandes eine Leiterplattenanordnung mit Steckverbindern zum elektrischen Anschluß von Elektromagneten bei Ventileinheiten bekannt. Dabei werden Leiterplatten in Druckmittelkanäle aufweisende Anschlußblöcke derart integriert, daß beim Zusammenstecken mehrerer Anschlußblöcke neben einer Verbindung der Druckmittelkanäle auch die elektrische Verbindung über an den Seiten jeder Leiterplatte angeordnete Steckverbinder automatisch erfolgt. Zum Schutz vor äußeren Einflüssen sind die Leiterplatten innerhalb des Anschlußblockes in einem Durchgangskanal untergebracht. Zwar ist bei dieser Lösung infolge der Anwendung des Prinzips einer elektrischen Steckverbindung der Montageaufwand im Vergleich zu einer freien Verdrahtung denkbar klein; die geschützte Unterbringung der Leiterplatten innerhalb des als Gehäuse dienenden Anschlußblockes unterliegt jedoch einem hohen Herstellungsaufwand für die Anschlußblöcke.

Der Erfindung liegt daher die Aufgabe zugrunde, eine Vorrichtung zum elektrischen Anschluß von gruppiert angeordneten elektrischen Elementen zu schaffen, die einerseits eine einfache Montage ermöglicht und andererseits auch preiswert herstellbar ist.

Die Erfindung wird, ausgehend vom Oberbegriff des Anspruchs 1, in Verbindung mit dessen kennzeichnenden Merkmalen gelöst. Vorteilhafte Weiterbildungen der Erfindung sind in den Unteransprüchen angegeben.

Die Erfindung schließt die technische Lehre ein, daß alle elektrischen Verbindungen von Kontakten eines Steckers, einer Buchse sowie eines abgehenden Anschlusses für elektrische Elemente in Form von Leiterbahnen räumlich innerhalb eines einstückig ausgebildeten Anschlußelements verlaufen. Dabei bildet der Stecker einen ersten und die Buchse einen zweiten Abschnitt des Anschlußelements. Die beiden Abschnitte sind mittels eines Bodens voneinander getrennt, durch den die Leiterbahnen über kleine im Boden befindliche Durchbrüche hindurchgeführt sind. Weiterhin ist der vorzugsweise zweipolige Anschluß - beispielsweise als Buchsenpaar - am Anschlußelement angeordnet. Damit verläßt der Gegenstand der Erfindung den Bereich der auf eine Raumebene begrenzten Ausgestaltung von Mitteln zum elektrischen Anschluß von gruppiert angeordneten elektrischen Elementen, der durch die Leiterplattentechnik vorgegeben war. Für die räumliche Ausgestaltung von Leiterbahnen in einem einstückigen Anschlußelement wird vorzugsweise die Zwei-Komponenten-Spritzgußtechnik mit anschließender nasschemischer Metallisierung einer Kunststoffkomponente (MID-Technik) eingesetzt. Bei dieser Technik wird ein einstückiger Körper aus zwei thermoplastischen Kunststoffen hergestellt, von denen eine Komponente metallisierbar ist, während die andere Komponente von der chemischen Einwirkung der Metallisierungselektrolyte völlig unberührt bleibt. So lassen sich einstückige Kunststoffkörper herstellen, denen durch eine geeignete Beschichtung partiell metallische Eigenschaften verliehen werden können. Der metallisierbare Kunststoff kann in Form von elektrischen Leiterbahnen strukturiert sein. Die vorliegende Erfindung gestattet es, viele elektrische Elemente über viele im Anschlußelement verlaufende Leiterbahnen anzuschließen, wobei kleinste Außenabmaße des Anschlußelements realisiert werden können. Das erfindungsgemäße Anschlußelement verfügt über ein filigranes Stecker- bzw. Buchsenprofil. Enge Kontaktabstände können durch nutförmige Ausnehmungen zwischen benachbarten Kontakten, die der Vermeidung von Kriechstrombildung dienen, realisiert werden. Der zwischen Stecker und Buchse zur Trennung liegende Boden ist mit Durchbrüchen versehen, um die Leiterbahnen von Kontakten des Steckers kommend durch den Boden hindurch zu Kontakten der Buchse zu führen. Aufwendige Kabelkonstruktionen können durch die somit direkt in das Anschlußelement räumlich eingebrachten Leiterbahnen ersetzt werden. Ein derartiges Anschlußelement ist auf einfache Weise in einem aus wenigen automatisierbaren Schritten bestehenden Herstellungsprozeß zu fertigen. Die Anschlußelemente sind damit preiswert in hoher Qualität herstellbar. Insbesondere bedingt durch die Einstückigkeit entfällt jeglicher Montageaufwand. Weiterhin entstehen nur sehr geringe Materialkosten.

Erfindungsgemäß sind zwei Arten von Anschlußelementen vorgesehen. Zum einen ist die elektrische Verbindung der Kontakte des Steckers mit den Kontakten der Buchse pingleich im Sinne einer Brückenschaltung ausgeführt. Hierbei kann der abgehende vorzugsweise zweipolige Anschluß für elektrische Elemente dafür genutzt werden, ein elektrisches Element mit einem anderen elektrischen Element parallel zu verschalten. Weiterhin kann ein Anschlußelement dieser Art auch zum Zwecke der räumlichen Überbrückung von Abständen zwischen elektrischen Elementen genutzt werden. In diesem Falle wird der Anschluß nicht belegt. Bei einer anderen Art von Anschlußelementen ist die elektrische Verbindung der Kontakte des Steckers mit den Kontakten der Buchse derart ausgeführt, daß nur ein Kontakt, vorzugsweise ein Minus-Kontakt, des Steckers mit einem pingleichen Kontakt der Buchse verbunden ist und die anderen Kontakte als signalführende Kontakte um jeweils einen Kontakt hochgetaktet miteinander verbunden sind. Es ist denkbar neben dem pingleich durchgeschleiften Minus-Kontakt auch einen ebenso pingleich durchgeschleiften Schutzleiter (Masse) zu führen. Der abgezweigte Anschluß für elektrische Elemente ist an einem Pol mit einem fest definierten signalführenden Kontakt verbunden und am anderen Pol mit den beiden vorstehend erwähnten pingleich verbundenen Kontakten verschaltet. Aus diesen beiden Arten von Anschlußelementen läßt sich eine vorzugsweise reihenartige Baueinheit bilden, wobei ein erstes Anschlußelement über seine Buchse mit dem Stecker eines nachfolgenden Anschlußelements verbunden wird. Eine asymmetrische Ausgestaltung von Stecker und Buchse verhindert als Verpolschutz ein falsches Zusammenstecken von Anschlußelementen. Der Anschluß zur Verbindung von elektrischen Elementen ist vorzugsweise rechtwinklig bezüglich einer koaxialen Anordnung von Stecker und Buchse am Anschlußelement angeordnet. Da die beiden Arten von Anschlußelementen in beliebiger Abfolge aneinanderreihbar sind, läßt sich eine daraus aufgebaute Vorrichtung zum elektrischen Anschluß (Baueinheit) äußerst flexibel einsetzen und gestattet insoweit eine Anpassung an viele Einsatzfälle. Die Anzahl der anschließbaren elektrischen Elemente ist jedoch begrenzt durch die Anzahl der im Anschlußelement unterbringbaren elektrischen Leiterbahnen. Restriktiv wird das Ziel eine möglichst hohe Anzahl von Leiterbahnen im Anschlußelement unterzubringen durch ein möglichst kleines Volumen eines Anschlußelements sowie durch die zu beachtenden Mindestabstände zwischen den Leiterbahnen beeinflußt. Um trotz des hohen Integrationsgrades unerwünschte Kriechströme zwischen den Leiterbahnen zu vermeiden, sind die Leiterbahnen vorteilhafterweise feuchtigkeitsgeschützt im Anschlußelement untergebracht. Dafür weist der Stecker eines jeden Anschlußelements eine angeformte lippenartig umlaufende Dichtwulst auf, die in einer komplementär dazu ausgestalteten nutförmigen Ausnehmung an der Buchse eines benachbarten Anschlußelements dichtend zur Anlage kommt.

Eine weitere, die Erfindung verbessernde Maßnahme liegt darin, daß die Kontakte des Steckers eines Anschlußelements mit einer zylinderartig gewölbten Kontaktfläche versehen sind, die an einer geraden Kontaktfläche der Kontakte der Buchse des benachbarten Anschlußelements linienartig zur Anlage kommt. Dadurch entsteht eine nur geringe Berührungsfläche der Kontakte, so daß ein Zusammenstecken und Lösen trotz fehlender Federwirkung an den Kontakten und einer erforderlichen leichten Preßpassung erleichtert wird. Die durch die Herstellungstechnik bedingten sehr geringen Fertigungstoleranzen garantieren andererseits auch eine zuverlässige elektrische Kontaktierung zwischen Stecker und Buchse.

Eine Baueinheit ineinandergesteckter und insoweit hintereinandergeschalteter Anschlußelemente wird erfindungsgemäß über den Stecker des ersten Anschlußelements einer Reihe über eine Signalkabelbuchse mit einer Steuereinheit verbunden. Die Baueinheit hintereinandergesteckter Anschlußelemente kann vorzugsweise eine reihenartige oder auch eine ringartige Struktur aufweisen. Neben der Verwendung eines mehrpoligen Signalkabels zur Überbrückung eines Abstandes zwischen der Steuereinheit und der Baueinheit aus Anschlußelementen kann die Baueinheit auch direkt an der Steuereinheit über eine unmittelbar an der Steuereinheit befindlichen Buchse angeschlossen sein.

Zum sicheren Halt der Signalkabelbuchse am ersten Anschlußelement kann erfindungsgemäß ein daran befindlicher Schnapphaken vorgesehen werden, der in einen an der Außenfläche des Anschlußelements angeformten Vorsprung eingreift.

Erfindungsgemäß ist die Buchse des letzten Anschlußelements einer Reihe über eine Verschlußkappe mit angeformter lippenartig umlaufender Dichtwulst, die in die nutförmige Ausnehmung der Buchse des letzten Anschlußelements dichtend zur Anlage kommt, verschließbar. Damit wird diese offene Stelle der Baueinheit, an der die Leiterbahnen bloßliegen, wirkungsvoll vor schädigenden äußeren Einflüssen geschützt.

Vorzugsweise verfügt ein Anschlußelement über mindestens zwei signalführende Kontakte, so daß eine der Kontaktzahl entsprechende Anzahl von Anschlußelementen mit hochgetakteten signalführenden Kontakten zu einer Reihe zusammenfaßbar sind. Dabei sind beliebig viele Anschlußelemente mit pingleicher Brückenschaltung dazwischenschaltbar, um insoweit Abstände zwischen elektrischen Elementen überbrücken zu können oder auch parallele Verschaltungen weiterer elektrischer Elemente vornehmen zu können.

Andere vorteilhafte Weiterbildungen der Erfindung werden nachstehend zusammen mit der Beschreibung der bevorzugten Ausführung der Erfindung anhand der Figuren näher dargestellt. Es zeigen:
- Fig. 1: eine perspektivische Darstellung eines Anschlußelements mit Blickrichtung auf den Stecker,
- Fig. 2: eine perspektivische Darstellung eines Anschlußelements mit Blickrichtung auf die Buchse,
- Fig. 3: eine Ansicht von vorn des Steckers sowie der Buchse, wobei die Kontakte pingleich miteinander verbunden sind,
- Fig. 4: eine Ansicht von vorn des Steckers sowie der Buchse, wobei die Kontakte hochgetaktet miteinander verbunden sind,
- Fig. 5: eine Schnittdarstellung eines Anschlußelements nach Figur 4 in der Ebene Z-Z,
- Fig. 6: eine Schnittdarstellung eines Anschlußelements nach Figur 4 in der Ebene G-G,
- Fig. 7: eine Darstellug des räumlichen Verlaufes einer Leiterbahn im Anschlußelement,
- Fig. 8: eine weitere Ausführungsform des Steckers eines Anschlußelements,
- Fig. 9: eine Darstellung der Buchse eines Anschlußelements nach Figur 8 und
- Fig. 10: eine Baueinheit aus aneinandergeschalteten Anschlußelementen zur elektrischen Verbindung für Elektromagnete von Ventilen.

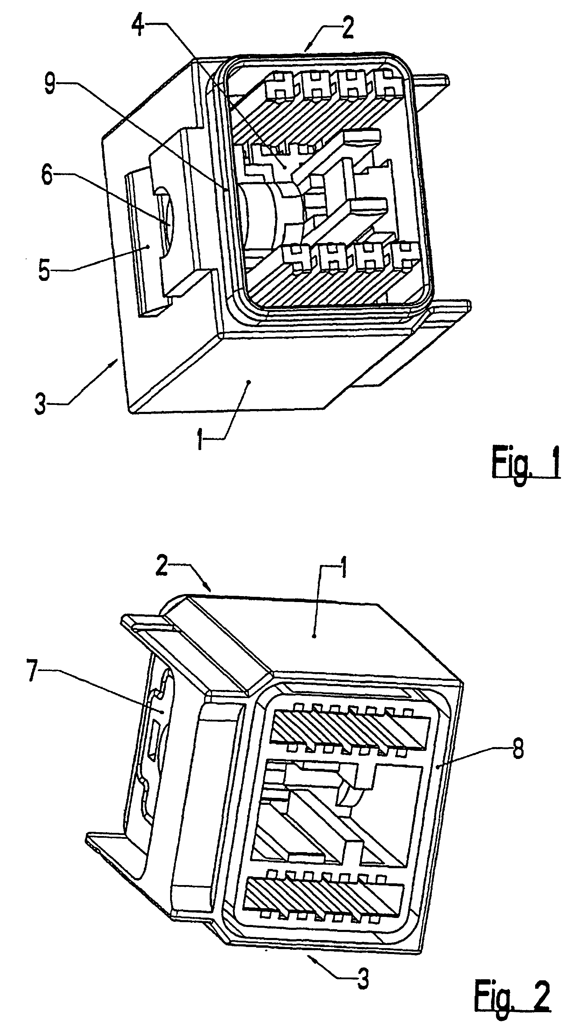

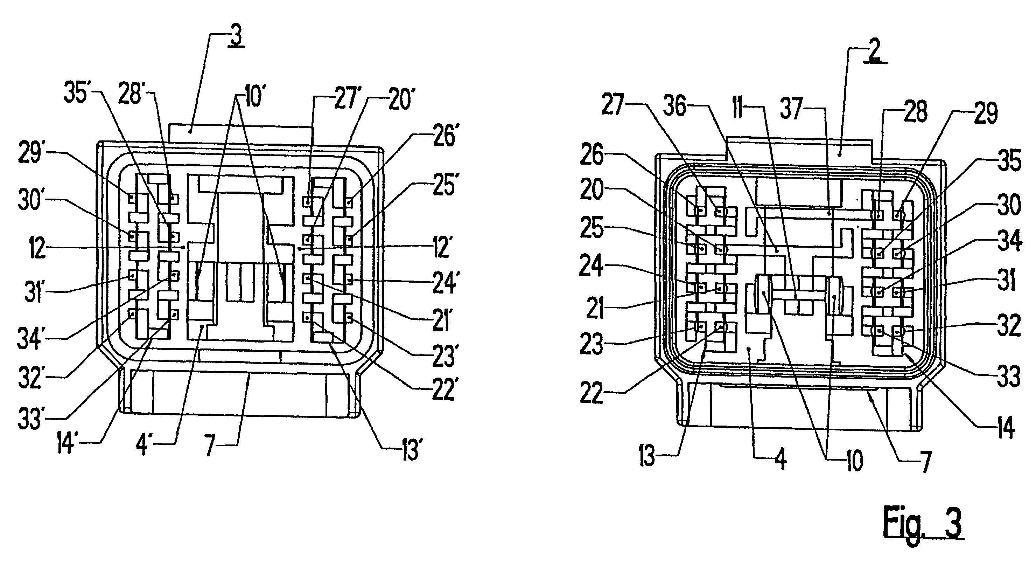

Ein quaderförmig ausgebildetes Anschlußelement 1 nach Figur 1 besteht aus einem als Stecker 2 ausgebildeten ersten Abschnitt und einem rückseitigen - hier nicht erkennbaren - zweiten Abschnitt, der als Buchse 3 ausgebildet ist. Der Stecker 2 wird durch den Boden 4 von der Buchse 3 getrennt. Auf der Außenfläche des Anschlußelements 1 ist weiterhin ein Vorsprung 5 angeordnet. Der Vorsprung 5 dient einem steckerseitigen Schnappbügel als Halt, damit eine mechanische Sicherung der Verbindung gewährleistet werden kann. Im Bereich des Vorsprungs 5 ist eine das Anschlußelement 1 durchdringende Bohrung 6 angeordnet. Durch die Bohrung 6 ist eine Befestigungsschraube für das Anschlußelement 1 hindurchführbar. An der dem Vorsprung 5 gegenüberliegenden Seite des Anschlußelements 1 ist ein in Figur 2 teilweise erkennbarer zweipoliger Anschluß 7 für einen am Anschlußelement 1 als elektrisches Element anschließbaren Elektromagneten angeordnet. An der Seite, an der sich die Buchse 3 befindet, ist eine umlaufende Nut 8 angeordnet. Die Nut 8 gewährleistet mit einer Dichtlippe 9 am Stecker 2 nach Figur 1 eine abdichtende Verbindung aneinandergesteckter Anschlußelemente 1. Mehrere Anschlußelemente sind über ihre Buchse 3 und ihre Stecker 2 in einer Reihe aneinandersteckbar, so daß mehrere Elektromagnete über entsprechende Anschlüsse 7 ansteuerbar sind. Dabei sind zwei Arten von Anschlußelementen zu unterscheiden. Bei der einen Art ist die elektrische Verbindung wird nach Art einer Brückenschaltung von den Kontakten des Steckers 2 zu den Kontakten der Buchse 3 pingleich weitergeleitet. Bei der anderen Art wird einem Elektromagneten über den Anschluß 7 ein Ansteuersignal zugeführt. Die übrigen Ansteuersignale werden über eine Brückenschaltung weitergeleitet. Die beiden Arten von Anschlußelementen 1 können sich in ihrer äußeren Gestalt unterscheiden oder andere Unterscheidungsmerkmale - beispielsweise in Form einer Farbmarkierung - tragen. Der Unterschied wird durch die von ihrer jeweiligen Aufgabe diktierten unterschiedlichen internen Verschaltung bestimmt. Die räumlich angeordneten Leiterbahnen verlaufen innerhalb der unterschiedlichen Anschlußelemente verschieden. Nachfolgend wird konkret der Verlauf der Leiterbahnen innerhalb eines Anschlußmodules mit pingleicher Brückenschaltung beschrieben.

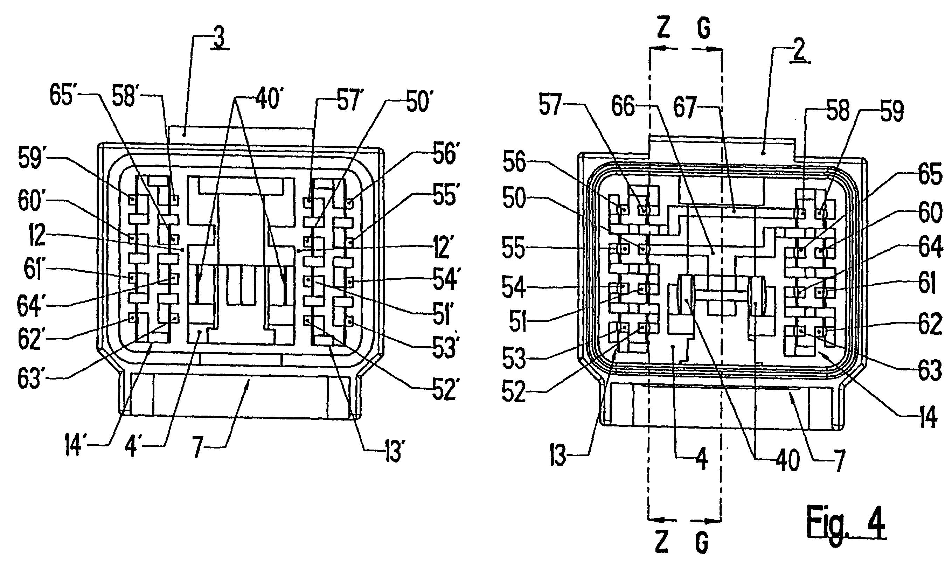

Wie aus Figur 3 ersichtlich, ist ein großer Minus-Kontakt 10 im Zentrum des Steckers 2 angeordnet. Der Minus-Kontakt 10 besteht aus zwei separaten, über einen dazwischenliegenden Steg 11 gehaltenen Kontakthälften. Entlang beider Kontakthälften verläuft gleichermaßen außen an den dem Steg 11 gegenüberliegenden Seiten der beiden Kontakthälften eine Leiterbahn bis auf den Boden 4 des Steckers, dort um eine Kante des Kontaktes rechtwinklig herum und über einen in der Figur nicht darstellbaren Durchbruch im Boden 4 an den dem Minus-Kontakt auf der anderen Seite des Bodens 4 gegenüberliegenden Minus-Kontakt 10' der Buchse 3. Der Minus-Kontakt 10' besteht ebenfalls aus zwei Kontakthälften, die an den Streben 12, 12' gegenüberliegend angeordnet sind. Durch Aneinanderstecken von Anschlußelementen wird insoweit eine pingleiche Verbindung von Minus-Kontakten 10 bzw. 10' hergestellt. Nach dem gleichen Prinzip werden bei der Art von Anschlußelementen 1, die über eine pingleiche Brückenschaltung verfügen, die signalführenden Kontakte 20 bis 35 miteinander verbunden. Die sechzehn signalführenden Kontakte 20 bis 35 sind hierbei auf zwei sich im Profil des Steckers 2 bzw. der Buchse 3 konzentrierende rechteckförmige und sich gegenüberliegende Kontaktbereiche 13 und 14 bzw. 13' und 14' angeordnet. Beispielsweise sind bezüglich des Kontaktbereiches 13 jeweils vier Kontakte gegenüberliegend in einer Reihe angeordnet. Zwischen zwei benachbarten Kontakten einer Reihe befindet sich stets eine Nut, die als Kriechstrecke eine unerwünschte Kriechstrombildung zwischen je zwei benachbarten Kontakten vermeidet und gleichsam einen geringen Kontaktabstand sicherstellt.

Der erste signalführende Kontakt 20 des Steckers 2 weist eine nach außen gewölbte Kontaktfläche auf. Die auf der Kontaktfläche verlaufende Leiterbahn ist bis zum Boden 4 geführt. Hier geht sie rechtwinklig rechts um die Kante der neben dem Kontakt liegenden Nut, durch den im Nutbereich liegenden, hier ebenfalls nicht erkennbaren Durchbruch im Boden 4 hindurch, um auf der anderen Seite des Bodens 4' der Buchse 3 aus dem dortigen Nutbereich kommend rechtwinklig um die Nutkante an dem gegenüber dem Kontakt 20 des Steckers 2 befindlichen Kontakt 20' der Buchse 3 zu gehen. In der gleichen Weise sind die übrigen fünfzehn Kontakte 21 bis 35 des Steckers 2 mit den analogen Kontakten 21' bis 35' der Buchse 3 pingleich verschaltet. Weitere in der Figur 3 erkennbare Leiterbahnen 36 sowie 37, die auf dem Boden 4 verlaufen, dienen der anderen Art von Anschlußelementen 1, die dem Anschluß von Anschluß von Elektromagneten dienen, für eine entsprechende, diese Funktion erfüllende elektrische Verbindung. Da die Leiterbahnen 36 bei der Art von Anschlußelementen 1 mit pingleicher Brückenschaltung, die allein der Abstandsüberbrückung dienen, nicht benötigt werden, können sie dort elektrisch unterbrochen sein.

Anschlußelemente 1 der anderen Art weisen gemäß Figur 4 auch einen anderen Verlauf der Leiterbahnen auf. Davon bildet jedoch der Minus-Kontakt 40 eine Ausnahme, der- analog zur vorstehend beschriebenen Art von Anschlußelementen 1 - pingleich mit seinem dem Boden 4 örtlich gegenüberliegenden Kontakt 40' sowie zusätzlich mit dem einen in der Figur nicht erkennbaren Pol des Anschlusses 7 verbunden ist. Die signalführenden Kontakte 50 bis 65 sind hier nach einem anderen Prinzip verschaltet. Demnach verläuft eine Leiterbahn entlang des ersten signalführenden Kontaktes 50 des Steckers 2 bis auf den Boden 4. Von dort aus wird mittels der T-förmig über den Boden 4 verlaufenden Leiterbahn 66 eine Verbindung mit dem zweiten in dieser Figur nicht erkennbaren Pol des Anschlusses 7 für Elektromagneten hergestellt. Ebenso wird eine Leiterbahn 67 vom Kontaktbereich 13 zum Kontaktbereich 14 geführt, die durch den Boden 4 hindurchgeleitet wird, um an den Kontakt 65' der Buchse 3 zu gehen. Diese Verbindung kann fakultativ dazu genutzt werden, daß über nur ein Steuersignal zwei insoweit parallel geschaltete Elektromagnete ansteuerbar sind, da normalerweise der Kontakt 65' der Buchse 3 bedingt durch die hier verwendete spezielle Leiterbahnführung ungenutzt bleibt.

Die Leiterbahn des zweiten signalführenden Kontaktes 51 am Stecker 2 verläuft zum Boden 4. Von dort aus ist die Leiterbahn über dem Boden 4 derart geführt, daß sie zunächst links um die Kante der dem zweiten Kontakt 51 benachbarten Nut verläuft. Dort geht er durch den im Nutbereich angeordneten Durchbruch im Boden 4 hindurch, um auf der anderen Seite - an der Buchse 3 - aus dem dortigen Nutbereich kommend rechtwinklig um die Nutkante herum an den Kontakt 50' zu gehen. Die übrigen signalführenden Kontakte 52 bis 65 des Steckers 2 sind in derselben mit den Kontakten 51' bis 64' verbunden. Der letzte signalführende Kontakt 65' der Buchse 3 kann gegebenenfalls - wie oben ausgeführt - frei bleiben.

Zusammenfassend wird also bei Anschlußelementen 1, die der Art mit verbundenem Anschluß 7 angehören, stets ein und derselbe signalführende Kontakt an einem Pol pingleich durchgeschleiften Minus-Kontakt 40 bzw. 40'. Die übrigen fünfzehn signalführenden Kontakte werden in oben beschriebener Weise um einen Kontakt hochgetaktet verschaltet.

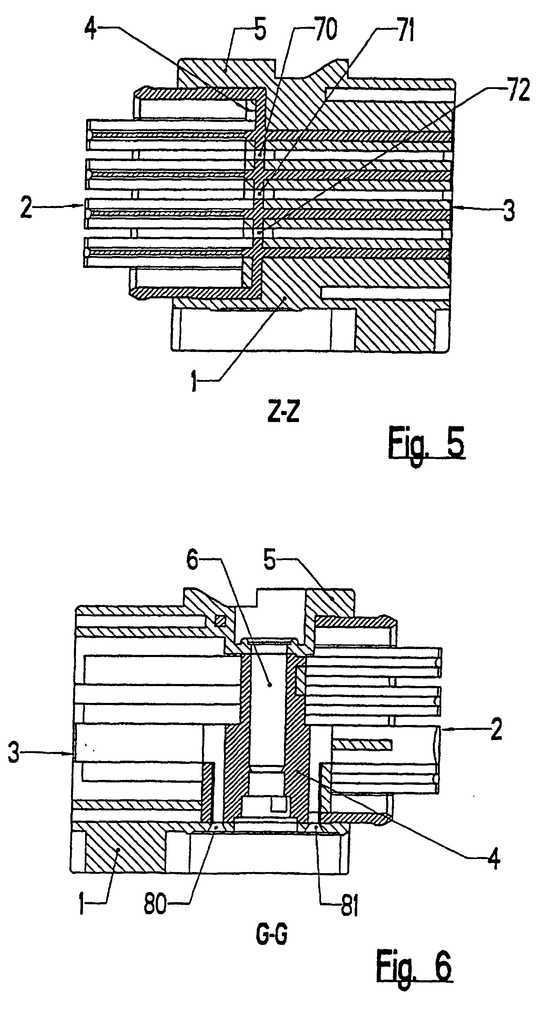

Aus der Figur 5 gehen Druchbrüche 70 bis 72 hervor, die im Boden 4 durch Hindurchführung der Leiterbahnen vom Stecker 2 zur Buchse 3 vorgesehen sind. Bei der Gestaltung derartiger Durchbrüche ist darauf zu achten, daß ein Mindestdurchmesser bzw. eine Mindestkantenbreite eingehalten wird, damit ein zuverlässiger Verlauf des naßchemischen Metallisierungsprozesses erfolgen kann und insoweit eine geschlossene Leiterbahn entstehen kann.

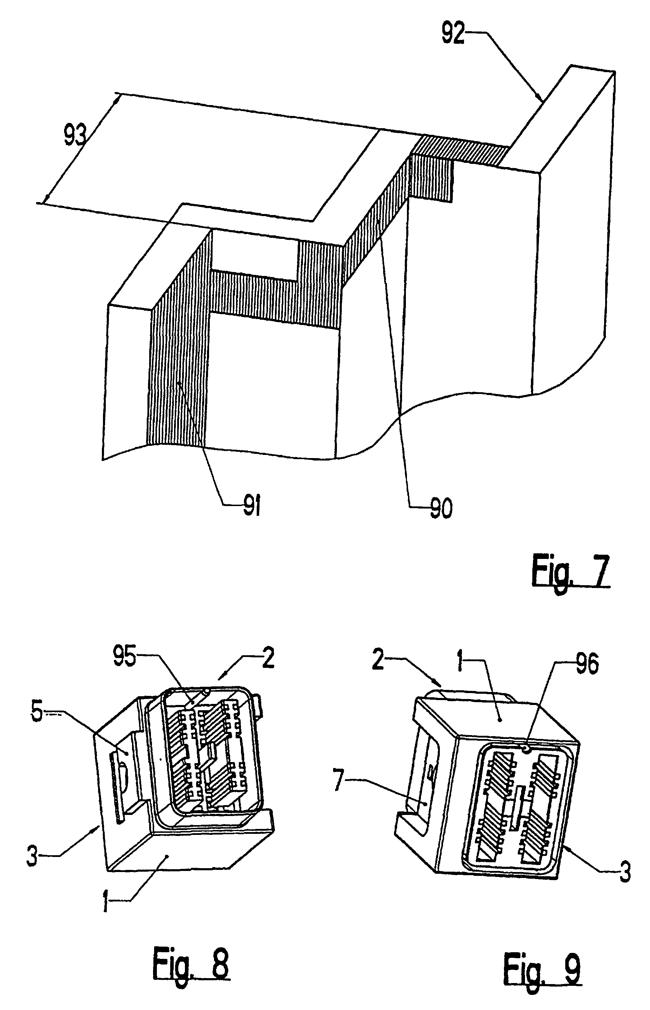

Aus der Figur 6 ist die Lage beider Pole 80 und 81 des Anschlusses 7 für Elektromagnete ersichtlich. Ebenfalls ist die abgestufte Durchgangsbohrung 6 im Boden 4 erkennbar, die einer hier nicht dargestellten Schraube zur Befestigung eines Anschlußelements 1 am Elektromagneten dient.

Beispielhaft zeigt die Figur 7 den möglichen Verlauf einer aus dem Gesamtsystem des Anschlußelements 1 herausgelösten Leiterbahn 90, die signalführende Kontaktflächen 91 und 92 miteinander verbindet. Von der Kontaktfläche 91 kommend, gelangt die Leiterbahn 90 durch einen Bodenbereiches 93, auf dem sie räumlich versetzt in mehreren Ebenen abgewinkelt verläuft, zur Kontaktfläche 92.

Neben der dem vorstehend beschriebenen Ausführungsbeispiel zugrundeliegenden Profil des Steckers 2 sind auch andere günstige Profilierungen des Steckers 2 denkbar. Eine mögliche Profilierung zeigt Figur 8. Die komplementär dazu ausgestaltete Profilierung der Buchse 3 zeigt Figur 9. Für die verpolsichere Kontaktierung sorgt hier eine Erstreckung 95 am Stecker 2, die analog zu einer Ausnehmung 96 an der Buchse 3 angeordnet ist. Ebenso ist es auch denkbar die Profilierung von Stecker und Buchse in Form von ineinandergeschachtelten Ringen auszuführen, um eine günstige Anordnung der Kontakte zu gewährleisten. Dabei kann sich vorzugsweise im Zentrum des innersten Ringes ein zylinderförmiger Kontakt für den Nulleiter befinden.

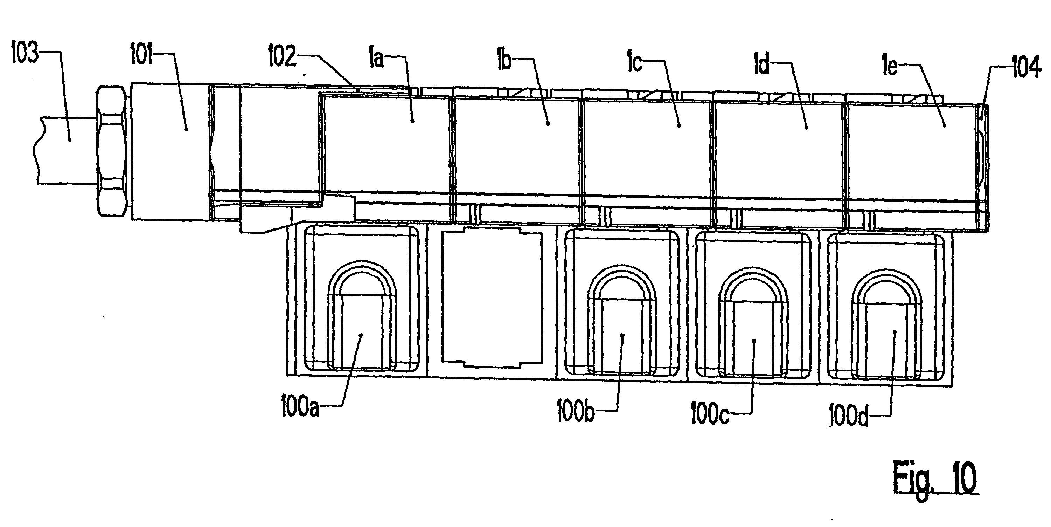

Eine Baueinheit von fünf hintereinandergeschalteten Anschlußelementen 1a bis 1e dient in einem Beispiel nach Figur 10 dem Anschluß von vier Ventilen 100a bis 100d Eine Baueinheit von fünf hintereinandergeschalteten Anschlußelementen 1a bis 1e dient in einem Beispiel nach Figur 10 dem Anschluß von vier Ventilen 100a bis 100d mit dazugehörigen Grundplatten zur Druckmittelversorgung. Wegen der breiteren Ausführung des Ventils 100b im Vergleich zu den anderen Ventilen 100a, 100c sowie 100d gehört das Anschlußelement 1b der Art mit pingleicher Brückenschaltung an. Damit kann der hier vorliegende größere Abstand zwischen dem Ventil 100a und dem Ventil 100b überbrückt werden. Die übrigen Anschlußelemente 1a, 1c, 1d sowie 1e gehören der Art mit verbundenem Anschluß 7 für Elektromagneten an. Die Zuführung des Ansteuersignals erfolgt über die Signalkabelbuchse 101 am Ende eines Signalkabels 103. Das Signalkabel 103 geht von einer in der Figur 10 nicht dargestellten Steuereinheit - beispielsweise eine speicherprogrammierbare Steuerung (SPS) - aus. An der Signalkabelbuchse 101 ist ein Schnapphaken 102 zur Sicherung der Steckverbindung angeordnet. Eine Abdeckkappe 104 kann am letzten Anschlußelement 1e der Reihe zum Schutz der dort bloßliegenden Leiterbahnen vor äußeren Einflüssen - wie Feuchtigkeit - vorgesehen werden.

Figur 10 zeigt die Anordnung der Anschlußelemente 1a bis 1e direkt an den Elektromagneten der ihnen zugeordneten Ventile 100a bis 100d. Damit ist die Reihe hintereinandergeschalteter Anschlußelemente 1a bis 1e von außen her sichtbar an den ihnen zugeordneten Ventil 100a bis 100d angeordnet. Ebenso können die einzelnen Anschlußelemente 1 auch direkt in einer zu jedem Ventil 100 gehörenden - in der Figur nicht dargestellten - fluidischen Grundplatte integriert oder direkt an der Grundplatte befestigt sein.

### Bezuoszeichenliste

- 1: Anschlußelement
- 2: Stecker
- 3: Buchse
- 4: Boden
- 5: Vorsprung
- 6: Bohrung
- 7: Anschluß
- 8: nutförmige Ausnehmung
- 9: Dichtwulst
- 10: Minus-Kontakt
- 11: Steg
- 12: Strebe
- 13: erster Kontaktbereich
- 14: zweiter Kontaktbereich
- 20: erster Kontakt
- 21: zweiter Kontakt
- 22: dritter Kontakt
- 23: vierter Kontakt
- 24: fünfter Kontakt
- 25: sechster Kontakt
- 26: siebenter Kontakt
- 27: achter Kontakt
- 28: neunter Kontakt
- 29: zehnter Kontakt
- 30: elfter Kontakt
- 31: zwölfter Kontakt
- 32: dreizehnter Kontakt
- 33: vierzehnter Kontakt
- 34: fünfzehnter Kontakt
- 35: sechzehnter Kontakt
- 36: Leiterbahn, T-förmig
- 37: Leiterbahn
- 40: Minus-Kontakt
- 50: erster Kontakt
- 51: zweiter Kontakt
- 52: dritter Kontakt
- 53: vierter Kontakt
- 54: fünfter Kontakt
- 55: sechster Kontakt
- 56: siebenter Kontakt
- 57: achter Kontakt
- 58: neunter Kontakt
- 59: zehnter Kontakt
- 60: elfter Kontakt
- 61: zwölfter Kontakt
- 62: dreizehnter Kontakt
- 63: vierzehnter Kontakt
- 64: fünfzehnter Kontakt
- 65: sechzehnter Kontakt
- 66: Leiterbahn, T-förmig
- 67: Leiterbahn
- 70: erster Durchbruch
- 71: zweiter Durchbruch
- 72: dritter Durchbruch
- 80: erster Pol
- 81: zweiter Pol
- 90: Leiterbahn
- 91: erste Kontaktfläche
- 92: zweite Kontaktfläche
- 93: Bodenbereich
- 95: Erstreckung
- 96: Ausnehmung
- 100: Ventil
- 101: Signalkabelbuchse
- 102: Schnapphaken
- 103: Signalkabel
- 104: Abdeckkappe

## Patentansprüche

1. Elektrisches Anschlußelement für gruppiert angeordnete elektrische Elemente, insbesondere Elektromagnete von Ventileinheiten, mit einer mehrpoligen elektrischen Brückenverbindung, bei der ausgehend von Kontakten eines eingangsseitigen Steckers (2) die elektrische Verbindung zu Kontakten einer komplementär zum Stecker (2) ausgebildeten ausgangsseitigen Buchse (3) weitergeleitet ist, und ein von der elektrischen Brückenverbindung abgezweigter mindestens zweipoliger Anschluß (7) für die elektrischen Elemente vorgesehen ist,
**dadurch gekennzeichnet, daß** alle elektrischen Verbindungen in Form von Leiterbahnen, räumlich und in mehreren Ebenen verlaufend, als leitende Oberflächenbereiche des einstückigen Anschlußelementes (1) ausgebildet sind, wobei der Stecker (2) einen ersten Abschnitt und die Buchse (3) einen zweiten Abschnitt bildet und die Leiterbahnen durch einen dazwischenliegenden Boden (4) hindurchgeführt sind, und weiterhin der Anschluß (7) für elektrische Elemente außenseitig am Anschlußelement (1) angeordnet ist.

2. Elektrisches Anschlußelement nach Anspruch 1,
**dadurch gekennzeichnet,**
**daß** das Anschlußelement (1) als Spritzgußteil aus Kunststoff mit metallisierten Leiterbahnen ausgeführt ist.

3. Elektrisches Anschlußelement nach Anspruch 1,
**dadurch gekennzeichnet,**
**daß** die elektrische Verbindung eines Minus-Kontaktes (10) sowie von signalführenden Kontakten (20 bis 35) des Steckers (2) mit analogen Kontakten der Buchse (3) pingleich ausgeführt ist und der Anschluß (7) nicht beschaltet ist.

4. Elektrisches Anschlußelement nach Anspruch 1,
**dadurch gekennzeichnet,**
**daß** die elektrische Verbindung der Kontakte des Steckers (2) mit den Kontakten der Buchse (3) derart ausgeführt ist, daß nur ein Minus-Kontakt (40) des Steckers (2) mit einem pingleichen Minus-Kontakt (40') der Buchse (3) verbunden ist und signalführende Kontakte (50 bis 65) um jeweils einen Kontakt hochgetaktet miteinander verbunden sind, wobei der Anschluß (7) für elektrische Elemente an seinem einen Pol (81) mit einem fest definierten signalführenden Kontakt (50) verbunden ist und an seinem anderen Pol (80) an den beiden pingleich verbundenen Minus-Kontakten (40, 40') angeschlossen ist.

5. Elektrisches Anschlußelement nach einem der Ansprüche 1 bis 4,
**dadurch gekennzeichnet,**
**daß** allen elektrischen Kontakten elektrische Kontaktflächen zugeordnet sind, die verpolsicher asymmetrisch am Stecker (2) sowie an der Buchse (3) angeordnet sind.

6. Elektrisches Anschlußelement nach einem der Ansprüche 1 bis 5,
**dadurch gekennzeichnet,**
**daß** der Anschluß (7) rechtwinklig bezüglich einer koaxialen Anordnung von Stecker (2) und Buchse (3) am Anschlußelement (1) angeordnet ist.

7. Baueinheit aus Anschlußelementen nach einem der vorstehenden Ansprüche,
**dadurch gekennzeichnet,**
**daß** ein Anschlußelement (1a) über seine Buchse (3) mit dem Stecker (2) eines nachfolgenden Anschlußelements (1b) verbunden ist und daß weitere Anschlußelemente (1c,1d,1e) gleichartig zu einer Reihe ergänzbar sind.

8. Baueinheit nach Anspruch 7,
**dadurch gekennzeichnet,**
**daß** der Stecker (2) eines Anschlußelements (1) eine angeformte lippenartig umlaufende Dichtwulst (9) aufweist, die in einer komplementär dazu ausgestalteten nutförmigen Ausnehmung (8) an der Buchse (3) des benachbarten Anschlußelements (1) dichtend zur Anlage kommt.

9. Baueinheit nach den Ansprüchen 7 bis 8,
**dadurch gekennzeichnet,**
**daß** die Kontakte des Steckers (2) eines Anschlußelements (1) mit einer zylinderartig gewölbten Kontaktfläche versehen sind, die an einer geraden Kontaktfläche der Kontakte der Buchse (3) des benachbarten Anschlußelements (1) linienartig zur Anlage kommt.

10. Baueinheit nach den Ansprüchen 7 bis 9,
**dadurch gekennzeichnet,**
**daß** der Stecker (2) des ersten Anschlußelements (1a) einer Reihe über eine Signalkabelbuchse (101) mit einer Steuereinheit verbunden ist

11. Baueinheit nach den Ansprüchen 7 bis 10,
**dadurch gekennzeichnet,**
**daß** die Außenfläche des Anschlußelements (1) einen angeformten Vorsprung (5) aufweist, der von einem Schnapphaken (102) an der Signalkabelbuchse (101) umgreifbar ist.

12. Baueinheit nach den Ansprüchen 7 bis 11,
**dadurch gekennzeichnet,**
**daß** die Buchse (3) des letzten Anschlußelements (1h) einer Reihe über eine Abdeckkappe (104) mit angeformter lippenartig umlaufender Dichtwulst, die in die nutförmige Ausnehmung der Buchse des letzten Anschlußelements (1e) dichtend zur Anlage kommt, verschließbar ist.

13. Baueinheit nach den Ansprüchen 7 bis 12,
**dadurch gekennzeichnet,**
**daß** je ein Anschlußelement (1) über mindestens zwei signalführende Kontakte verfügt und eine der Kontaktzahl entsprechende Anzahl von Anschlußelementen (1) mit hochgetakteten signalführenden Kontakten zu einer Reihe zusammenfaßbar sind, wobei beliebig viele Anschlußelemente (1) mit pingleicher Verbindung von Kontakten des Steckers (2) mit den Kontakten der Buchse (3) zwischen den Anschlußelementen (1) mit beschalteten Anschlüssen (7) für elektrische Elemente schaltbar sind.

14. Baueinheit nach den Ansprüchen 7 bis 13,
**dadurch gekennzeichnet,**
**daß** zur gleichzeitigen Ansteuerung zweier parallelgeschalteter Elektromagnete von Ventilen der erste signalführende Kontakt (50) des Steckers (2) mit dem letzten signalführenden Kontakt (64') der Buchse (3) über eine entlang des Bodens (4) verlaufende Leiterbahn (66) verbunden ist.

## Claims

1. Electrical connector element for electrical elements which are disposed in groups, in particular for electromagnets of valve units, with an electrical bridge connection with a plurality of poles, wherein starting from contacts of an input-side plug (2), the electric connection is continued to contacts of an output-side bushing (3) which is arranged complementary to the plug (2), and wherein an adapter (7) having at least two poles is provided for the electrical elements, wherein the adapter (7) is branched off the bridge connection,
**characterized in that** all electrical connections are arranged in the form of strip conductors which are disposed spacially and in a plurality of layers as contacting surface areas of the integral connector element (1), wherein the plug (2) forms a first area and the bushing (3) forms a second area and the strip connectors ran through an intermediate base (4) and wherein the adapter (7) for electrical elements is arranged on an outside of the connector element (1).

2. Connector element according to claim 1,
**characterized in that** the connector element (1) is arranged as injection moulded component made of plastics with metal coated strip conductors.

3. Electrical connector element according to claim 1,
**characterized in that** the electrical connection of a negative contact (10) as well as of signal carrying contacts (20-35) of the plug (2) are arranged with analog contacts of the bushing (3) with the same pin arrangement and that the adapter (7) is not connected.

4. Electrical connector element according to claim 1,
**characterized in that** the electrical connection of the contacts of the plug (2) to the contacts of the bushing (3) is arranged such that only a negative contact (40) of the plug (2) is connected to a negative contact (40') of the bushing (3) with the similar pin arrangement and that the signal carrying contacts (50-65) are respectively connected to each other up-cycled by one contact, wherein the adapter (7) for electrical elements is connected at its pole (81) to a fixedly defined signal carrying contact (50) and is connected at its other pole (80) to the two negative contacts (40,40') connected with the same pin arrangement.

5. Electrical connector element according to one of claims 1 to 4,
**characterized in that** electric contact areas are assigned to all electrical contacts which are arranged assymetrically at the plug (2) and at the bushing (3) such that a reverse battery protection is provided.

6. Electrical connector element according to one of claims 1 to 6,
**characterized in that** the adapter (7) is arranged perpendicular to a coaxial arrangement of the plug (2) and the bushing (3) at the connector element (1).

7. Component comprising connector elements according to one of the preceding claims, **characterized in that** a connector element (1a) is connected to a plug (2) of a succeeding connector element (1b via a bushing (3) and that further connector elements (1c,1d,1e) may be added in the same manner to form a line.

8. Component according to claim 7,
**characterized in that** the plug (2) of the connector element (1) has a formed liplike circumferential sealing bead (9) which abuts sealingly against a complementary formed groove like recess (8) at the bushing (3) of the adjacent connector element (1).

9. Component according to claims 7 to 8,
**characterized in that** the contacts of the plug (2) of a connector element (1) have a cylindrically arced contact surface which abuts in line form against an even contact surface of the contacts of the bushing (3) of the adjacent connector element (1).

10. Component according to claims 7 to 9,
**characterized in that** the plug (2) of the first connector element (1a) is connected to a control unit in a line via a signal cable bushing (101).

11. Component according to claims 7 to 10,
**characterized in that** the outer surface of the connector element (1) has a protrusion (5) formed therein which maybe encompassed by a snap-fit (102) at the signal cable bushing (101).

12. Component according to claims 7 to 11,
**characterized in that** the bushing (3) of the last connector element (1h) of a line can be closed by means of a cap (104) having a liplike circumferential sealing bead, which abuts sealingly against the groovelike recess of the bushing of the last connector element (1e).

13. Component according to claims 7 to 12,
**characterized in that** each connector element (1) has at least two signal carrying contacts and that a number of connector elements (1) corresponding to the number of contacts having up cycled signal carrying contacts maybe combined to a line, wherein any number of contact elements (1) with the same pin arrangement between the contacts of the plug (2) and the contacts of the bushing (3) maybe connected between the connector elements (1) with connected connectors (7) for electrical elements.

14. Component according to claims 7 to 13,
**characterized in that** the first signal carrying contact (50) of the plug (2) is connected to the last signal carrying contact (64') of the bushing (3) by means of a strip conductor (66) running along the base (4) for enabling the coinstantaneous control of two electromagnets of valves arranged in parallel.

## Revendications

1. Élément de raccordement électrique pour éléments électriques disposés de manière groupée, en particulier des électro-aimants pour des unités de valve, comprenant une liaison par pontage électrique sur plusieurs pôles, dans lequel, en partant de contacts d'une fiche mâle (2) côté entrée, la liaison électrique est transmise à des contacts d'une fiche femelle (3) côté sortie formée de manière complémentaire à la fiche mâle (2), et un raccordement (7) au moins bipolaire, dérivé de la liaison par pontage électrique, est prévu pour les éléments électriques,
**caractérisé en ce que** toutes les liaisons électriques sont constituées sous forme de pistes conductrices s'étendent spatialement et sur plusieurs niveaux, en tant que zone conductrice de surface de l'élément de raccordement monobloc (1), ce par quoi la fiche mâle (2) forme une première section et la fiche femelle (3) forme une deuxième section et les pistes conductrices sont conduites au travers d'un fond (4) situé entre, et que d'autre part le raccordement (7) pour éléments électriques est disposé à l'extérieur de l'élément de raccordement (1).

2. Élément de raccordement électrique selon la revendication 1,
**caractérisé en ce que** l'élément de raccordement (1) est réalisé en tant que pièce en matière synthétique moulée par injection avec des pistes conductrices métallisées.

3. Élément de raccordement électrique selon la revendication 1,
**caractérisé en ce que** la liaison électrique d'un contact "moins" (10) ainsi que de contacts (20 à 35) conduisant des signaux de la fiche mâle (2) se réalisent au moyen de contacts analogues de la fiche femelle (3), en broche à broche, et que le raccordement (7) n'est pas connecté.

4. Élément de raccordement électrique selon la revendication 1,
**caractérisé en ce que** la liaison électrique des contacts de la fiche mâle (2) avec les contacts de la fiche femelle (3) est effectuée de manière telle que seul un contact "moins" (40) de la fiche mâle (2) est relié en broche à broche avec un contact "moins" (40') de la fiche femelle (3) et que des contacts (50 à 65) conduisant des signaux sont reliés ensemble avec chaque fois un incrément d'un contact, ce par quoi le raccordement (7) pour éléments électriques est relié à l'un de ses pôles (81) avec un contact (50) conduisant un signal, défini de manière fixe, et qu'à son autre pôle (80) est raccordé aux deux contacts "moins" (40, 40') reliés broche à broche.

5. Élément de raccordement électrique selon l'une des revendications 1 à 4,
**caractérisé en ce que** des surfaces de contact électrique sont affectées à tous les contacts électriques, disposées de manière asymétrique à la fiche mâle (2) ainsi qu'à la fiche femelle (3), sans possibilité d'inversion de polarité.

6. Élément de raccordement électrique selon l'une des revendications 1 à 5,
**caractérisé en ce que** le raccordement (7) est disposé à angle droit à l'élément de raccordement (1) par rapport à une disposition coaxiale de la fiche mâle (2) et de la fiche femelle (3).

7. Unité structurelle constituée d'éléments de raccordement selon l'une quelconque des revendications précédentes,
**caractérisée en ce que** un élément de raccordement (la), au travers de sa fiche femelle (3) est relié avec la fiche mâle (2) d'un élément de raccordement (1b) suivant et que d'autres éléments de raccordement (1c, 1d, le) peuvent, de la même manière, se compléter en une rangée.

8. Unité structurelle selon la revendication 7,
**caractérisée en ce que** la fiche mâle (2) d'un élément de raccordement (1) présente un renflement d'étanchéisation (9) ressemblant à une lèvre l'entourant, formé sur elle, qui s'appuie en étanchéisant dans un creux (8) en forme de rainure qui lui est complémentaire, réalisé sur la fiche femelle (3) de l'élément de raccordement (1) avoisinant.

9. Unité structurelle selon les revendications 7 à 8,
**caractérisée en ce que** les contacts de la fiche mâle (2) d'un élément de raccordement (1) sont pourvus d'une surface de contact bombée de type cylindrique qui vient en appui en ligne sur une surface de contact droite de la fiche femelle (3) de l'élément de raccordement (1) avoisinant.

10. Unité structurelle selon les revendications 7 à 9,
**caractérisée en ce que** la fiche mâle (2) du premier élément de raccordement (la) d'une rangée est reliée à une unité de commande par une fiche femelle (101) de signal.

11. Unité structurelle selon les revendications 7 à 10,
**caractérisée en ce que** la surface extérieure de l'élément de raccordement (1) présente une avancée (5) formée sur elle qui peut être agrippée par un crochet (102) d'encliquetage de la fiche femelle (101) de signal.

12. Unité structurelle selon les revendications 7 à 11,
**caractérisée en ce que** la fiche femelle (3) du dernier élément de raccordement (1h) d'une rangée peut se verrouiller par un capuchon de couverture (104) qui présente un renflement d'étanchéisation ressemblant à une lèvre l'entourant, formée sur lui, qui s'appuie en étanchéisant dans un creux en forme de rainure dans la fiche femelle du dernier élément de raccordement (1e).

13. Unité structurelle selon les revendications 7 à 12,
**caractérisée en ce que** dans tous les cas un élément de raccordement (1) dispose d'au moins deux contacts conduisant un signal et qu'un nombre d'éléments de raccordement (1) correspondant au nombre de contacts avec des contacts conducteurs de signal incrémentés peuvent se regrouper en une rangée, un nombre quelconque d'éléments de raccordement (1), comprenant une liaison broche à broche de contacts de la fiche mâle (2), pouvant se connecter avec les contacts de la fiche femelle (3) entre les éléments de raccordement (1) comprenant des raccordements (7) connectés pour des éléments électriques.

14. Unité structurelle selon les revendications 7 à 13,
**caractérisée en ce que** pour la commande simultanée de deux électro-aimants de valve connectés en parallèle, le premier contact (50) conducteur de signal de la fiche mâle (2) est relié au dernier contact (64') conducteur de signal de la fiche femelle (3) par une piste conductrice (66) s'étendant le long du fond (4).
